# EUROPEAN PATENT APPLICATION

(11) **EP 4 834 121 A1**
(43) Date of publication of application: **04.11.2026**
(21) Application number: 26174820.6
(22) Date of filing: 27.04.2026
(51) Int. Cl.: A23J 3/14, A23J 3/22, A23J 3/26, A23J 3/34, A23L 29/238

(54) **TEXTURED PLANT PROTEIN PRODUCT AND METHOD**

(30) Priority: 01.05.2025 US 202519196398
(71) Applicant: GLANBIA DAIRY NUTRITION LIMITED, Kilkenny R95 YTD5 (IE)
(72) Inventor: Demmerly, Jason, Twin Falls, 83301 (US)
(74) Representative: Dehns

(57) **Abstract**

Disclosed is a method for producing textured plant protein products using an admixture of at least one plant protein and transglutaminase. The method provides a means for forming textured pea protein products, for example, that can be used in a variety of applications, particularly in food products comprising vegan meat substitutes.

## Description

### Field of the Invention

The invention relates to meatless protein products and methods for making those products. More specifically, the invention relates to methods for making textured plant protein products and products made by those methods.

### Background of the Invention

In the United States alone, the market for plant-based meat alternatives is estimated at from $800 million to $1.4 billion. Analysts predict that the market for alternative meat could reach $140 billion within the next ten years, potentially capturing about 10% of the $1.4 trillion global meat market. Consumer acceptance of plant-based meat substitutes has increased, fueled largely by a combination of the health benefits of plant-based nutrition and the potential to decrease the environmental impacts of meat production to meet the needs of an ever-increasing human population. A multitude of new meatless protein products and brands have been developed, all with the goal of providing plant-based protein products with the taste and texture of meat.

The most common proteins utilized in meat substitutes are soy protein and wheat gluten, primarily because of the processing advantages they provide, as well as their abundance, availability and low cost. However, consumers have become more interested in soy-free and gluten-free products, so pea protein is becoming a more and more attractive option. It is the plant protein highest in the amino acid leucine and is also rich in arginine and lysine. Also, processing of pea protein requires significantly less water than does processing soy protein or meat protein, providing a more environmentally-sustainable option as a source of dietary protein.

However, textured vegetable protein, used as, or as an ingredient in, many types of meat substitutes, has traditionally been made from soy flour, soy concentrate, and/or soy isolates, and while pea protein is an attractive alternative, the use of pea protein has presented some challenges. As Shand *et al.* noted, pea protein products "have been reported to exhibit comparable and complementary functionality to homologous soybean protein products, however, it has been noted that heat-induced gels of pea proteins were weaker than soy protein gels." (Shand, P.J., et al. Physicochemical and textural properties of heat induced pea protein isolate gels, Food Chemistry 102 (2007) 1119-1130.) This is important because formulating meat substitutes generally involves producing gelatinized matrices, or gels, comprising one or more plant proteins.

Textured protein products are generally produced as fibers, shreds, chunks, bits, granules, slices or similar food forms. Textured vegetable protein "can be described as food items that wholly or partially take the place of meat in the human diet and that have an appearance, texture and nutritional content similar to meat products." (Riaz, M.N., Texturized vegetable proteins, Handbook of Food Proteins (2011) p. 395-418, Woodhead Publishing Series in Food Science, Technology and Nutrition.) Textured vegetable protein (TVP) has been on the market for over 50 years, the widely-used term "TVP" having been trademarked by the Archer Daniels Midland company in the 1960s. However, with the increasing interest in, and demand for, meatless protein products, development of new vegetable protein products with better flavor, texture, soy-free and gluten-free, has been a goal for ingredient companies, companies that produce vegan and vegetarian foods, and even some companies that traditionally have been known solely for meat production.

Pea flour and concentrates have previously been used for texturization. However, Riaz observed that "[t]hese raw materials are somewhat variable, have often been extensively heat treated prior to extrusion, and are therefore very difficult to texturize." (Riaz, M.N., Texturized vegetable proteins, Handbook of Food Proteins (2011) p. 402, Woodhead Publishing Series in Food Science, Technology and Nutrition). Most textured vegetable protein products are produced using heat extrusion technology (also known as "hot extrusion" or "extrusion cooking," and carried out at temperatures above about 100 degrees Celsius). This has required high-temperature (producing significant protein denaturation) and high-pressure processing using additional ingredients such as starches to aid in development of the gelatinized matrix that is the goal of the texturization process. For example, United States Patent Number 8,728,560 (Boursier et al., 20 May 2014) discloses the addition of sodium metasulfite and gypsum to reduce the formation of disulfide bridges in the protein and strengthen the textured product, respectively. However, most consumers prefer "clean-label" products that have few ingredients, and even more important to them is the idea that those ingredients be easily recognizable as safe, simple, food ingredients.

For over 50 years, the state of the art in the field of production of texturized proteins has been heat extrusion technology. Efforts continue to be made to improve on that technology. However, what are really needed are new and better processing methods for making textured-protein-based products that provide cost-effective options for processing ingredients for use as meat substitutes and/or meat extenders while retaining the nutritional value the protein(s) can provide.

### Summary of the Invention

The invention provides a method (Method A) for producing at least one textured plant protein product, the method comprising the steps of admixing water, transglutaminase, and plant protein to produce a water/transglutaminase/protein admixture (this step may be referred to as step (a) of Method A); holding the admixture for a period of time sufficient to produce a gelatinized protein cake (this step may be referred to as step (b) of Method A); grinding the gelatinized protein cake to produce a ground protein product (this step may be referred to as step (c) of Method A); and drying the ground protein product at a drying temperature from about 60 to about 300 degrees Celsius to produce a textured pea protein product (this step may be referred to as step (d) of Method A). The invention also relates to textured protein products made by the method, and to meat substitutes made using those textured protein products.

In various aspects of the invention, the plant protein is pea protein. In various aspects, the ratio of water to protein in the admixture comprises from about 0.5:1 to about 5: 1, by weight. In various aspects, the transglutaminase is added at from about 0.0001 percent to about 10 percent of the admixture, by weight, and in various aspects the holding time can be a period of from about 0.5 to about 60 minutes to produce a gelatinized protein cake, with those of skill in the art recognizing that holding time can vary according to the amount or concentration of transglutaminase used. In various aspects of the invention, the grinding is performed using a meat grinder.

In an aspect, the invention provides a method (Method B) for producing a textured plant protein product, the method comprising the steps of
(a) admixing water, transglutaminase, and plant protein to produce a water/transglutaminase plant protein admixture;
(b) holding the admixture for a period of time sufficient to produce a gelatinized protein cake;
(c) shaping the gelatinized protein cake to produce a strip protein product (preferably wherein the strip protein product is a meat-like strip protein product); and
(d) drying the strip protein product at a drying temperature of from about 60 to about 300 degrees Celsius, to produce the textured plant protein product;
wherein step (c) of the method is performed using cold extrusion processing.

In a further embodiment of any of the preceding aspects or embodiments (including the aspects directed to Method A and/or Method B, and/or any preceding embodiments further defining these aspects), the plant protein comprises at least one pea protein, preferably wherein the plant protein is at least one pea protein.

In a further embodiment of any of the preceding aspects or embodiments (including but not limited to the aspects directed to Method A and/or Method B, and/or any preceding embodiments further defining these aspects), step (b) comprises holding the admixture for the period of from 0.5 minutes to about 60 minutes.

In a further embodiment of any of the preceding aspects or embodiments (including but not limited to the aspects directed to Method A and/or Method B, and/or any preceding embodiments further defining these aspects), a (weight) ratio of the water to the plant protein in the admixture comprises (or is) from about 0.5:1 to about 5:1.

In a further embodiment of any of the preceding aspects or embodiments (including but not limited to the aspects directed to Method A and/or Method B, and/or any preceding embodiments further defining these aspects), the (weight) ratio of the water to the plant protein in the admixture comprises (or is) from about 2:1 to about 3:1.

In a further embodiment of any of the preceding aspects or embodiments (including but not limited to the aspects directed to Method A and/or Method B, and/or any preceding embodiments further defining these aspects), the transglutaminase is added at from about 0.0001 percent to about 10 percent of the admixture, by weight.

In a further embodiment of any of the preceding aspects or embodiments (including but not limited to the aspects directed to Method A and/or Method B, and/or any preceding embodiments further defining these aspects), the transglutaminase is a microbial transglutaminase.

In a further embodiment of any of the preceding aspects or embodiments (including but not limited to the aspects directed to Method B, and/or any preceding embodiments further defining these aspects), step (c) is performed using a cold extrusion die.

In a further embodiment of any of the preceding aspects or embodiments (including but not limited to the aspects directed to Method A and/or Method B, and/or any preceding embodiments further defining these aspects), the transglutaminase is present at from about 0.01% to about 10%, by weight. This range may refer to the amount of the transglutaminase by weight of the textured plant protein product.

In a further embodiment of any of the preceding aspects or embodiments (including but not limited to the aspects directed to Method A and/or Method B, and/or any preceding embodiments further defining these aspects), the plant protein is selected from the group consisting of protein from red lentils, green lentils, yellow lentils, brown lentils, chickpeas, garden peas, black-eyed peas, runner beans, fava beans, kidney beans, and combinations thereof.

In a further embodiment of any of the preceding aspects or embodiments (including but not limited to the aspects directed to Method A and/or Method B, and/or any preceding embodiments further defining these aspects), step (c) is performed at room temperature.

In a further embodiment of any of the preceding aspects or embodiments (including but not limited to the aspects directed to Method B, and/or any preceding embodiments further defining these aspects), steps (a) to (c) of the method are performed using cold extrusion processing.

In a further embodiment of any of the preceding aspects or embodiments (including but not limited to the aspects directed to Method B, and/or any preceding embodiments further defining these aspects), the strip protein product is a meat-like strip protein product.

The invention also provides a textured plant protein product obtainable by, or obtained by/made by, a method of the invention, such as Method A or Method B, preferably Method B. The method may be as defined in any of the preceding aspects or embodiments.

In a further aspect, the invention also provides a formed meat substitute product comprising at least one textured plant protein product of the invention (e.g. at least one textured plant protein product as defined in the preceding paragraph). As set out in the preceding paragraph, the textured plant protein product may be obtainable by, or obtained by/made by, a method as defined in any of the preceding aspects or embodiments. For example, the strip protein product may be a meat-like strip protein product, and/or steps (a)-(c) may be performed using cold extrusion processing.

The formed meat substitute product of the preceding aspect may comprise (a) the at least one textured protein product and (b) at least one plant protein. The at least one plant protein (component b) may be different to the plant protein in the at least one textured protein product (component a). The at least one plant protein (component b) preferably comprises (or is) at least one pea protein.

In a further aspect, the invention also provides a formed meat substitute product comprising:
(a) at least one textured protein product obtainable by, or obtained/made by, a method comprising: i) cold extrusion processing comprising admixing water, transglutaminase, and plant protein to produce a water/transglutaminase/plant protein admixture; holding the admixture for a period of time sufficient to produce a gelatinized protein cake; and shaping the gelatinized protein cake to produce strip protein product (preferably a meat-like strip protein product); and ii) drying the strip protein product at a drying temperature of from about 60 to about 300 degrees Celsius, to produce the textured plant protein product; and
(b) at least one plant protein.

The at least one plant protein (component b) may be different to the plant protein in the at least one textured protein product (component a). The at least one plant protein (component b) preferably comprises (or is) at least one pea protein. Shaping the gelatinized protein cake to produce the strip protein product may preferably be performed using a cold extrusion die. Shaping the gelatinized protein cake to produce the strip protein product may preferably be performed at room temperature.

### Brief Description of the Drawings

The patent or application file contains at least one drawing executed in color. Copies of this patent or patent application publication with color drawing(s) will be provided by the Office upon request and payment of the necessary fee.
FIGS. 1 through 4 illustrate the impact of degree of wetting on the physical appearance of a textured pea protein.
FIG. 1 is a photograph of a textured pea protein product produced with a 75% degree of wetting (1: 3 ratio pea protein to water), dried at 210°C.
FIG. 2 is a photograph of a textured pea protein product produced with a 60% degree of wetting (1: 1.5 ratio pea protein to water), dried at 210°C.
FIG. 3 is a photograph of a textured pea protein product, made in a rectangular shape, produced with a 60% degree of wetting (1: 1.5 ratio pea protein to water), dried at 210°C.
FIG. 4 is a photograph of a commercially-available textured pea made using an extrusion process.
FIG. 5 is a photo of a freshly-rolled meat ball made using the product of the invention (using pea protein).
FIG. 6 is a photo of the same type of meatball (pea protein) that has been freshly-rolled and coated using a coating comprising 1% Flax.
FIG. 7 is a photo showing a freshly-cooked vegetable protein (pea protein) meatball.
FIG. 8 is a photo of a cooked beef-based meat ball.
FIG. 9 is a photograph of a freshly-made vegan patty made using the product of the invention (using pea protein).
FIG. 10 is a photograph of a freshly-cooked vegan patty made using the product of the invention (using pea protein).
FIG. 11 is a photograph of a freshly-made and cooked sausage made using the product of the invention (using pea protein).
FIG. 12 is a photograph of a cut profile of a fresh sausage made using a product made by the method of the invention.
FIG. 13 is a photograph of a freshly-made "chicken" nugget made using a product of the invention.
FIG. 14 is a photograph of the same nugget as in FIG. 13 after being dipped in tempura and fried.
FIG. 15 is a photograph of a freshly-made street taco made using a product of the invention.
FIG. 16A is a photograph freshly-made "Italian sausage" made using a product of the invention (using pea protein).
FIG. 16B is a photograph of freshly-made pizza using the "Italian sausage" of FIG. 16A.
FIG. 16C is another photograph of the freshly-made pizza of FIG. 16B.
FIG. 17 is a photograph of a freshly-made gyro sandwich including "steak" strips made using a product of the invention (using pea protein).
FIG. 18 is a photograph of freshly-made fajitas including "steak" strips made using a product of the invention (using pea protein).
FIG. 19 is a photograph of freshly-made broccoli and plant based beef including "steak" strips made using a product of the invention (using pea protein).
FIG. 20 is a photograph of a freshly-made BBQ sandwich including "steak" strips made using a product of the invention (using pea protein).
FIG. 21A is a photograph of dried plant-based protein strips made using a product of the invention.
FIG. 21B is a photograph of hydrated plant-based protein strips made using the strips of FIG. 21A.
FIG. 22A is a photograph of dried plant-based protein crumble made using a product of the invention.
FIG. 22B is a photograph of hydrated plant-based protein crumble made using the crumble of FIG. 22A.
FIG. 23 is a representation of the custom die/attachment created for a single screw Hobart Mixer/Grinder machine or pasta extruder or any type of single screw, low pressure extrusion.
FIG. 24 is an illustration of the vanes created inside the custom die attachment to facilitate the even distribution of extrudate coming out of the single screw sanitary tube.
FIG. 25 is an illustration of the cutouts displayed on a stainless steel plate or die where the extrudate exits to form the plant-based meat strips.
FIG. 26 is an illustration of the custom die plated bolted to the adapter funnel.
FIG. 27 is an illustration of the sanitary tube welded to the funnel, showing how the adapter connects to the single screw machine.
FIG. 28 is an illustration showing an exemplary angle of the funnel adapter from the tube connecting to the extruder.

### Detailed Description

For the avoidance of doubt, preferred features described in the detailed description below may apply equally to of any of the preceding aspects or embodiments disclosed in the Summary of the Invention section (including but not limited to the aspects directed to Method A and/or Method B, and/or any preceding embodiments further defining these aspects, as well as to the textured plant protein products and the formed meat substitutes of the invention).

The inventors have developed a method for producing textured plant protein products that does not require the customary use of the extended (e.g., high) temperature/pressure levels required for heat extrusion processing, providing a more cost-effective, more clean-label, textured protein that the inventors have used to make a variety of meatless protein products such as vegan meatballs, vegan patties (e.g., burgers, sausage), vegan sausage links, vegan crumbles and vegan chicken- nugget-type products. These products exhibit a very meat-like texture and pleasant flavors by adding different types of flavors and spices to produce different categories of products.

The invention provides a method for producing a textured pea protein product, the method comprising the steps of admixing water, transglutaminase, and pea protein to produce a water/transglutaminase/pea protein admixture; holding the admixture for a period of time sufficient to produce a gelatinized protein cake; grinding the gelatinized protein cake to produce a ground protein product; and drying the ground protein product, at a drying temperature of from about 60 to about 300 degrees Celsius, to produce a textured pea protein product.

In various aspects of the invention, the ratio of water to pea protein in the admixture comprises from about 1:1 to about 3: 1. In various aspects, the transglutaminase is added at a level of from about 0.001 percent to about 0.003 percent of the admixture, by weight. In various aspects, flavorings are added at from about 0.01 percent to about 20 percent of the admixture, by weight.

In various aspects of the invention, the grinding step is performed by a meat grinder. The holding time for holding the admixture can be in the range of from about 0.5 to about 60 minutes, with those of skill in the art recognizing that the requisite time can vary according to the amount of transglutaminase used.

*Pisum sativum* (garden pea, field pea, spring pea, English pea, common pea, green pea) is a pulse species cultivated in several countries as a source of protein. Tulbek et al. describe the cultivation, nutritional value, and processing of peas (Tulbek, M.C. et al. Pea: A Sustainable Vegetable Protein Crop, Sustainable Protein Sources (2017) p. 145-164). Although it had previously been reported that transglutaminase could be used to cross-link pea protein, Tulbek et al. also disclose that "[c]urrent research indicates that pea protein products tend to exhibit weaker gel strength, viscosity, and texture compared to egg, soy, and meat proteins." However, the inventors have successfully utilized the cross-linking effects of transglutaminase to provide a type of gel that can be reduced in size and dried to produce a textured pea protein product that can be used instead of textured soy protein, for example, to provide a soy-free, gluten-free meat substitute or ingredient for meat substitute products such as vegan sausages, burgers, "chicken" nuggets, meatballs, etc. They chose to develop a method for producing these products that would not require the use of the most common method for producing textured protein products, namely, high temperature, high pressure heat extrusion.

In the method of the invention, the inventors have used the combination of enzyme cross-linking, protein hydration, flavor, grinding of the gel resulting from the hydration and cross-linking, and drying temperature to produce clean-label products having a texture and consistency that is very similar to that of meat and can readily be used as meat substitutes. Where the term "grinding" is used, however, it should be understood by those of skill in the art that the term is used herein to describe grinding, pulverizing, crumbling, mashing, milling, crushing, grating, shaping, and other similar methods for reducing the size of a protein cake to form smaller pieces of appropriate size for use as a texturized protein product. For example, in a process known to those of skill in the art as "cold extrusion," the product may be pressed through a metal plate comprising at least one aperture of desired shape, so that product pieces are formed as the product is pressed through the plate. Such a plate can be used as a die, providing apertures of desired size and shape, to form textured plant protein products of varying sizes and shapes. These may be desirable for producing a variety of different types of products, including, for example, what are known in the art as "crumbles," strips (such as meatless steak strips, meatless chicken strips), bacon strips, and other products. For further details regarding cold extrusion in food processing, which is carried out at temperatures of 100 degrees Celsius or less, typically at room temperature, and pressures of less than about 300 psi, *see* Sule S, et al. Applications of food extrusion technology. MOJ Food Process Technols. 2024;12(1):74-84; and Shelar A, et al. Extrusion in food processing: an overview. The Pharma Innovation Journal. 2019; 8(2):562-568; both of which are incorporated herein in their entirety.

Transglutaminase (2.3.2.13, protein-glutamine:amine γ-glutamyl-transferase) cross-links proteins by transferring the γ-carboxyamide group of the glutamine residue of one protein to the ε-amino group of the lysine residue of the same or another protein. Transglutaminase is commonly used in the food industry for a variety of applications, and it can be produced by a variety of bacteria such as, for example, *Streptomyces mobaraensis, Streptomyces libani, Bacillus circulans, Bacillus subtilis, Streptomyces ladakanum.* In 1989, microbial transglutaminase was isolated from *Streptoverticillium* sp. Transglutaminase is often provided in powder form, particularly for large-scale use in the food industry, and is available from a variety of commercial providers. Suitable transglutaminase enzymes for use in the method of the invention include, for example, those of microbial origin, which are widely available commercially.

The invention is described as a method for producing products made of pea protein. However, it should be clear to those of skill in the art that the method described herein can also be used for protein sources selected from the group consisting of pea protein concentrate, pea protein isolate, and other protein concentrates and isolates from other pulses such as red, green, yellow and brown lentils, chickpeas (chana or garbanzo beans), garden peas, black-eyed peas, runner beans, broad beans (fava beans) and kidney beans, for example. Also useful are proteins selected from the group consisting of rice protein isolate, rice protein concentrate, and soybean protein concentrate, soybean protein isolate, wheat protein concentrate, wheat protein isolate, teff protein concentrate, teff protein isolate, oat protein concentrate, oat protein isolate, corn protein concentrate, corn protein isolate, barley protein concentrate, barley protein isolate, sorghum protein concentrate, sorghum protein isolate, rye protein concentrate, rye protein isolate, millet protein concentrate, millet protein isolate, amaranth protein concentrate, amaranth protein isolate, buckwheat protein concentrate, buckwheat protein isolate, quinoa protein concentrate, quinoa protein isolate, and combinations thereof.

The method requires few steps and is very cost-effective - requiring only protein, enzyme, and optionally, flavor and spices, to prepare an exceptional transglutaminase textured pea protein product (TG-TPP) and an outstanding clean label option for meatless protein products. Briefly, the method can generally be performed by adding at least one pea protein to a container in which the product can be mixed/stirred. Plant proteins, such as pea protein, for example, are commercially available as protein isolates or protein concentrates, for example, in powder form (or, for example, as liquid compositions comprising protein and water). Transglutaminase enzyme is admixed with the pea protein. Optionally, flavor, spices, starches, carbohydrates, lipids, and other macro- and micronutrients can be added to enhance desired functional and/or nutritional characteristics, depending upon the end product that is desired, as the present method can be used to produce a variety of meatless protein products. Mixing (e.g., stirring) is performed for a period of time - usually less than 30 minutes. For example, ten minutes of mixing has been used by the inventors with great success. Tap water (at a temperature of about 55 degrees C) is added to the protein/enzyme mixture with continued stirring for less than about 2 minute(s). (It should be understood by one of skill in the art that if a liquid protein composition is used as a starting material, the addition of water may either be unnecessary or the amount reduced - i.e., the liquid protein composition may provide the amount and ratio of water and protein.) By way of non-limiting example, the resulting batter can be transferred to a container to form a "cake" to which moderate compression force is applied, and the compressed cake rested at room temperature for a brief period of time (which in some cases may, for example, need be no longer than 30 minutes). The cake is then milled using, for example, a meat grinder. The ground product is dried, using convection drying, for example, to produce a transglutaminase textured pea protein (TG-TPP) that can be used in a variety of food applications. Several of these applications are described in the Examples herein. Suitable methods for drying the ground protein product are known to those of skill in the art, and include, for example, various forms of convection drying.

A "gelatinized protein cake," as used herein, is a mass of protein that has been sufficiently cross-linked by the transglutaminase in the mixture to produce a relatively formed, somewhat gelatinous, loaf, block, lump, etc. that can be reduced to smaller pieces by various means such as, for example, grinding, pressing the loaf through a metal plate comprising at least one aperture or die of desired shape so that product pieces are formed as the product is pressed through the plate (e.g., cold extrusion), etc.

To produce some formed meatless or vegan products, it is beneficial to combine at least one textured protein product made by the method of the invention (e.g., textured pea protein) with a mixture of pea protein and transglutaminase, a mixture of pea protein and at least one hydrocolloid, or a combination of both, for example, to serve as a binder for the textured protein. In this case, transglutaminase is used at from about 0.001% to about 10%, by weight of dry ingredients. Suitable hydrocolloid sources include, for example, plant sources such as flax, chia, and combinations thereof, and gums such as carrageenan, gum arabic, locust bean methylcellulose, guar gum, gellan gum, tara gum, konjac gum, modified gum acacia, xanthan gum, pectin, and combinations thereof. Briefly, by way of example, a product such as a vegan meatball can be formed by this method by adding textured vegetable protein (as prepared by the method described above), reconstituted by admixing it with boiling water and cooking for 10 minutes, with pea protein, one or more hydrocolloids (e.g., a gum system prepared by admixing flax and pea protein at a ratio of about 40 to about 60, by weight), oil (e.g., hydrogenated palm kernel oil), and a seasoning blend. The textured vegetable protein is added to the dry blends and thoroughly mixed together. Oil and water can be added and mixed, and the resulting batter can be molded into balls and allowed to rest on a table top for 30 minutes before cooking the resulting product. Alternate methods for reconstitution of the TG-TPP are, of course, suitable for use in this method, such as, for example, adding boiling water to the TG-TPP and allowing that mixture to sit for 15 minutes on a table top or counter to achieve reconstitution of the textured vegetable protein.

The present method, products made by the method, and meat substitutes made using those products are described herein using the term "comprising." However, it should be understood that "comprising" encompasses within its bounds the more narrowly-interpreted terms "consisting of" and "consisting essentially of." The present method, products made by the method, and meat substitutes made using those products can therefore also be described using those terms. The method has been described as a method for making "a" textured protein product, but it should also be understood by those of skill in the art, given the disclosure herein, that variations of the method can be used to make variations of the product(s), resulting in a variety of different products that can actually be made using the method disclosed herein. That is, at least one textured protein product can be made by the method of the invention. Products made according to the method of the invention can be further described by means of the following non-limiting examples.

### Examples

Pea protein (Glanbia Plc., USA) and Transglutaminase, TG-S802 (Taixing Dongsheng Bio-Tech Co., LTD., China) were used in making the textured pea protein (TPP). The pea protein has the following characteristics: protein content (>80% d.b), Ash (<8%) fat (<10%) and moisture (<9%).

### Optimization of Processing Conditions for the Production of TPP

A complete factorial design (3 x 3 x 3 x 2) was used to establish the optimization condition for textured pea protein (TPP) (Table 1). Briefly, 500 g of pea protein was weighed using a digital weighing balance with 0.1 g precision (Model ML4002E, Mettler Toledo, Switzerland) into the mixing bowl of a stand mixer (Model KSM6573C0B, KitchenAid^{®}, USA). The desired amount of Transglutaminase was measured and added to the pea protein and mixed together for 10 minutes by setting the stirring rate of the KitchenAid^{®} mixer to level 2. Tap water (55°C) was measured and added to the mixture while stirring. The entire mixing operation, starting from the point of adding warm water to the admixture to when mixing action was stopped, was no longer than 1 minute. The batter was emptied into a bowl and moderate compressive force was applied to form a cake. The cake was allowed to stand at room temperature for the time periods shown in Table 1.

The gelled textured pea cake was removed from the container by gently tapping on the bottom and side of the container. The cake was subsequently sliced into sizes to facilitate milling in the meat grinder (Model HL200, Hobart, USA). The meat grinder comprised a holding area and the milling chamber. The milling chamber comprised mainly, the screw conveyor that is connected to electric motor, cutting blade and the die/shaper (1/4"). The screw conveyor provides a clockwise movement that crushes the cake and transports it to the die which is located at the outlet of the milling chamber. As the screw conveyor pressed the batter against the surface of the die, the cutting blade sliced through the batter to prevent formation of long strand TVP. This process of cold extrusion was performed at ambient room temperature. The TVP was then immediately divided into two equal part and dried in an industrial convective dryer (CO41408, MIWE condo, Arnstein Germany) with a preset temperature of 60°C and 210°C, respectively.

**Table 1**

| **Optimization of parameters for the production of the textured vegetable protein** | | | |
|---|---|---|---|
| **Parameters** | **Levels** | | |
| Transglutaminase, TG-S802 (as % inclusion rate) | 0.0005 | 0.001 | 0.003 |
| Pea protein (g) | 500 | | |
| Pea protein: Water (protein to water ratio) (g) | 1:1 | 1:1.5 | 1:3 |
| Milling die shape (1/4") | Rectangular, circular | | |
| Holding duration (minutes) | 30 | 20 | 10 |

In order to evaluate the TPP, 20 g dried TPP was added into 200 g boiled water in a beaker for 10 minutes holding duration. The water was removed by pouring the sample onto a screen with pore size of 600µm. Samples were subsequently analyzed for taste, aroma, color, water absorption, texture profile analysis hardness, adhesiveness, cohesiveness, springiness, and chewiness. The dried TPP was analyzed for amino acid, protein content, carbohydrate, ash and lipid content. The optimized TPP was selected for the subsequent experiment.

In the second part of the study, six formulations for each of meat analogue nugget, meatball, sausage, meat patties and meat crumbles were developed following the template shown in Table 2. For example, The TPP was milled into two different grade (fine and coarse) particles, presoaked in boiling water for 10 minutes, and then squeezed to remove the water using a screen mesh. After mixing all the ingredients, the desired batter was molded according to the desired application (nugget, meatball, sausage, crumbles and meat patties). For crumbles, water and season blend was brought to boiling and the TPP was added. The admixture was cooked until all the water was soaked up by TPP or completely evaporated.

The 10% TG pea ingredient is an admixture of transglutaminase and pea protein at the ratio of 10 to 100, by weight. The starch and gum system is an admixture of flax and pea protein at the ratio 40 to 60, by weight. The canola/coconut oil blend is an admixture of canola oil and coconut oil at the ratio of 60 to 40, by weight.

**Table 2**

| **Formulation for meat analogue nugget, meatball,** sausage **and patties** | | | | | |
|---|---|---|---|---|---|
| **Component/Ingredient** (%) | **Formulation** | | | | |
| | **1** | **2** | **3** | **4** | **5** |
| Textured vegetable protein | 10 | 20 | 40 | 60 | 90 |
| Pea protein(g) | 16.2 | 14.2 | 10.2 | 6.2 | 0.2 |
| Starch/gum blend | 16.2 | 14.2 | 10.2 | 6.2 | 0.2 |
| Water | 48.6 | 42.6 | 30.6 | 18.6 | 0.6 |
| Canola/coconut oil blend | 5.4 | 5.4 | 5.4 | 5.4 | 5.4 |
| Seasoning blend | 3.6 | 3.6 | 3.6 | 3.6 | 3.6 |

### Water Absorption Index

The water absorption index testing procedure was adapted from an American Soybean Association technical bulletin (1988). This test analyzes the amount of water a TPP will absorb at a set weight of product and set time. Twenty grams of textured wheat gluten was soaked in 100 ml of room temperature water for 20 minutes. After soaking, the hydrated product was drained on a screen for 5 minutes. The final weight was recorded. To calculate the Water Absorption Index, the following equation is used: $Water Absorption index = \frac{Rehydrated wt . - Original Wt .}{Original Wt .}$

### Texture Profile Analysis (TPA)

The textural properties of rehydrated TPP samples were measured using a texture analyzer (TA-XT plus, Stable Micro Systems, UK). The TA-42 blade is 3 mm thick, 7 cm wide and has a 45° chisel edge typically recommended for measurement of product overall firmness. Four pieces of the TPP were arranged perpendicularly to the blade as it moved at 1 mm/sec until 5 g resistance was sensed. Then it slowed to 0.5 mm/sec and continued 90% of the way through the products. Parameters obtained from the analysis included hardness, adhesiveness, cohesiveness, springiness, gumminess and chewiness.

### Color Measurement

The dried and the rehydrated TPP were used for the evaluation of the effect of TPP on the change of color. The values of L* (lightness), a* (redness), b* (yellowness) C* (chroma) and °h (hue angle), were measured by the CIELAB color system using a spectrophotometer (Model 45/0, ColorFlex EZ USA). Prior to the analysis, the equipment was standardized using the white calibration plate.

### Amino Acid Composition

The complete amino acid profile was performed using the AOAC (1990). Amino acid composition of products made by the method of the invention were similar to those of commercially-available TPP products made using extrusion technology.

### Statistical Analysis

All experiments were performed in triplicate and data was expressed as means±SD. The significant differences among means were determined by the analysis of variance (ANOVA) using Duncan's multiple comparisons at p≤0.05.

### Sensory Evaluation

Sensory tests for TPP nugget, meatball, sausage, and patties were conducted with a total of 10 panelists. A hedonic scale of 9 points was used and the attributes were appearance, color, texture, aroma, taste, and overall acceptance. All nugget, meatball, sausage and patties were cut into rectangle shape and presented to panelists on a plate with a three-random digit coded number to avoid bias. The score was based on a 9-point hedonic scale ranging from 1 (extremely dislike) to 9 (extremely like).

### Impact of Degree of Wetting on Physical Appearance of Product

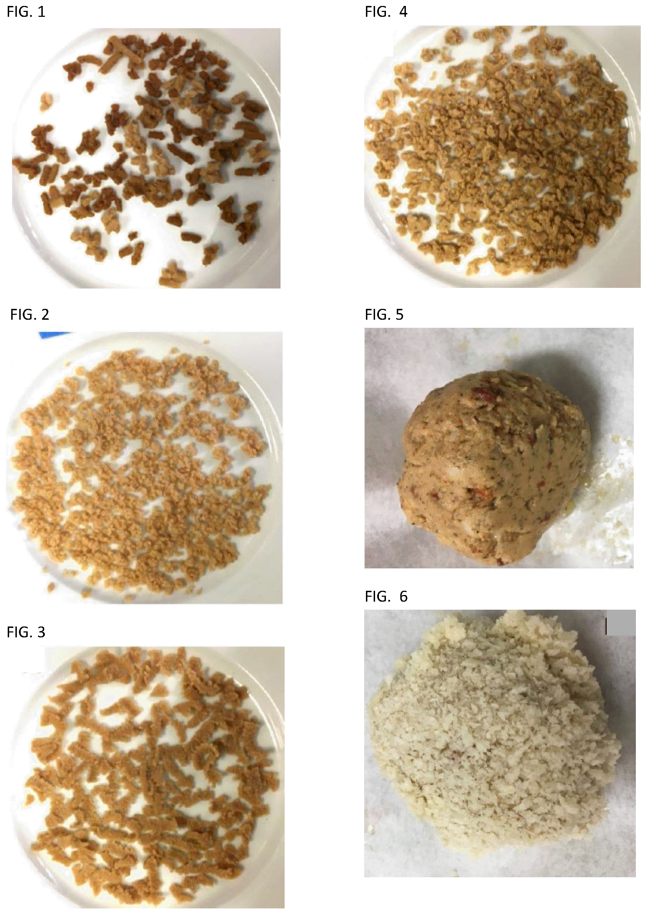

The impact of degree of wetting on the physical appearance of the textured pea protein is presented in FIGS. 1-4. The result showed when the degree of wetting increased, the surface roughness of the textured pea surfaces became smoother and degree of thermal induced browning during drying increased (FIG. 1). However, the appearances of the textured pea obtained at degree of wetting below 65% were comparable with the commercially available textured pea. Table 3 shows the analysis of the textured pea and commercially available product, respectively. The textured pea protein produced by the method of the invention has 85% protein content, while commercially available textured pea protein has a 65% protein content, on average. Amino acid analysis and comparison showed no significant difference between the present textured pea protein and commercially-available products. In addition, there was no thermal degradation as a result of drying at 210°C in comparison with drying at 70°C. However, at high degree of wetting, low temperature drying (below 70°C) can result in extended-duration drying and thermally-induced browning.

**Table 3**

| **Analytical Comparison of Textured Pea Product and Commercially-Available Products** | | | |
|---|---|---|---|
| | **Glanbia TVP*** | **Nutri-Crisps^{®}** | **ProFood** |
| Moisture Content (%) | 3.63 | 8.15 | 8.8 |
| Protein (Nx 6.25) (%) | 85.6 | 66.8 | 63.3 |
| Ash (%) | 3.27 | 2.98 | 4.54 |
| Lipid (%) | 9.51 | 7.82 | 9.24 |
| Carbohydrate (%) | 1.62 | 14.12 | 14.12 |

| | | | |
|---|---|---|---|
| * - Glanbia TVP is a textured pea protein product made by the method of the invention; Nutri-Crisps^{®} ( Cereal Ingredients, Inc., Leavenworth, KS); ProFood (ProFood International, Chicago, IL). | | | |

### Impact of Degree of Wetting on Color Profile

The impact of degree of wetting on the color profile of the textured pea protein and two different commercial products is presented in Table 4. Delta E is the measure of change in visual perception of two given colors, based on the following categories: <= 1.0 - Not perceptible by human eyes; 1-2 - Perceptible through close observation; 2-10 - Perceptible at a glance; 11-49 - Colors are more similar than opposite; 100 - Colors are exact opposite. A contrast in color between commercial product 1 and a product of the invention using the Transglutaminase inclusion rate of 0.0010% and 0.0030% is shown in Table 4.

Results indicated that the Delta E obtained demonstrated that the two products are perceptible at a glance. Similar results (Table 5) were obtained for commercial product 2. However, comparing the textured pea developed by the inventors vs each of the commercial textured pea products, as the degree of wetting increased beyond 60%, the ease of perception of differences significantly increased. Degree of wetting denoted by (1: 1) means 1 gram of pea protein isolate to 1 gram of water.

**Table 4**

| **Delta E Results for Color Analysis of Product of the Invention vs Commercially-Available Textured Pea Protein Product 1** | | | |
|---|---|---|---|
| **Enzyme Inclusion Level(%)** | **Degree of Wetting (%)** | | |
| | **50(1:1)** | **60 (1:1.5)** | **75 (1:3)** |
| **0.0010** | 4.3 | 4.4 | 10.9 |
| **0.0030** | 4.2 | 3.5 | 6.4 |

**Table 5**

| **Delta E Results for Color Analysis of Product of the Invention vs Commercially-Available Textured Pea Protein Product 2** | | | |
|---|---|---|---|
| **Enzyme Inclusion Level (%)** | **Degree of Wetting** (%) | | |
| | **50 (1:1)** | **60 (1:1.5)** | **75 (1:3)** |
| 0.0010 | 11.7 | 12.5 | 18.5 |
| 0.0030 | 11.5 | 11.7 | 14.5 |

### Impact of Soaking Product in Boiled Water for 10 Minutes - Degree of Hardness

The impact of processing (represented as boiling in water for 10 minutes) was assessed by measuring the degree of hardness for products produced using three different degrees of wetting (50%, 60%, and 75%) and two different levels of transglutaminase used to cross-link the protein (0.0010% vs. 0.0030%). The experiment was repeated 10 times, with the results being represented as the mean, with standard deviation (). Results are shown in Table 6.

**Table 6**

| **Comparison of Hardness Levels*** | | | |
|---|---|---|---|
| **Enzyme Inclusion Level (%)** | **Degree of Wetting** | | |
| | **50%(1:1)** | **60% (1:1.5)** | **75% (1:3)** |
| **0.0010%** | 4886.6 (122.5) | 2378.6 (54.8) | 5525.2 (266.2) |
| **0.0030%** | 900.2 (34.8) | 872.5 (39.2) | 820.0 (50.7) |

| | | | |
|---|---|---|---|
| (* - Hardness levels reflect impact of processing (boiling in water for 10 minutes) on products produced using three different degrees of wetting (50%, 60%, and 75%) and two different levels of transglutaminase (0.0010% vs. 0.0030%) used to cross-link the protein. | | | |

### Impact of Soaking Product in Boiled Water for 10 Minutes - Water Absorption Index

The impact of processing (represented as boiling in water for 10 minutes) was assessed by measuring the water absorption index for products produced using three different degrees of wetting (50%, 60%, and 75%) and two different levels of transglutaminase used to cross-link the protein (0.0010% vs. 0.0030%), as well as for two separate commercially-available products. Results are shown in Table 7. The water absorption index for commercially-available product 1 and 2 were found to be 220.7 and 225.9, respectively.

**Table 7**

| **Comparison of Water Absorption (Water Absorption Index)** | | | |
|---|---|---|---|
| **Enzyme Inclusion Level(%)** | **Degree of Wetting** (%) | | |
| | **50% (1:1)** | **60% (1:1.5)** | **75% (1:3)** |
| **0.0010** | 109.2 | 159.6 | 118.6 |
| **0.0030** | 182.9 | 212.5 | 168.1 |

### TVP as an Ingredient in a Vegan Meatball

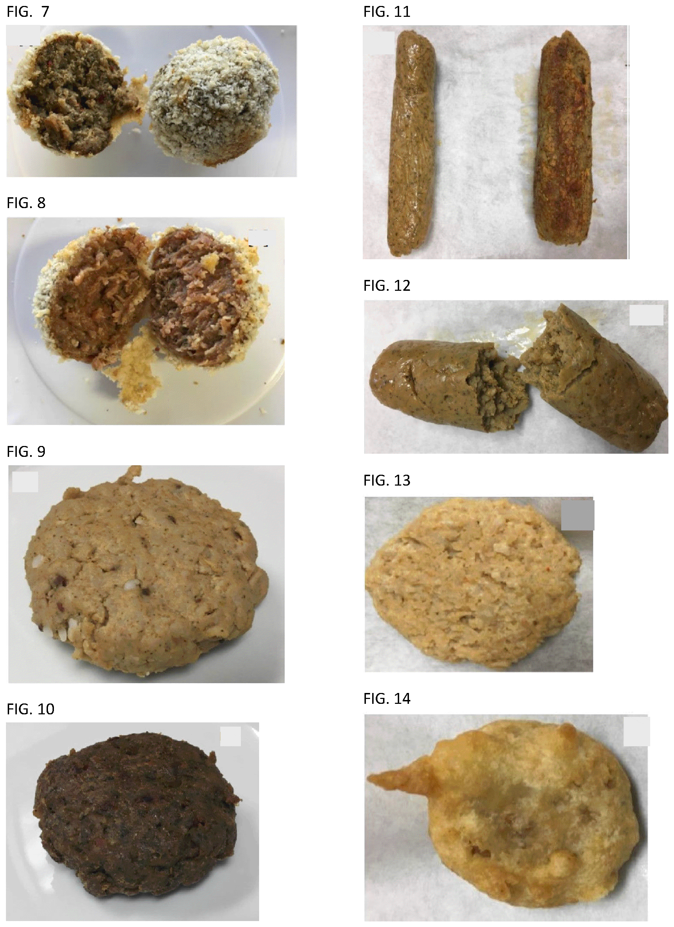

General ingredients for the vegan meatball are listed in Table 8. Textured vegetable protein was measured and added to boiling water and cooked for 10 minutes. (In an alternative method, boiling water was added to the textured vegetable protein and allowed to sit for 15 minutes on the table top.) Pea protein (Glanbia Nutritionals, Inc., Monroe, WI) was measured into a bowl, 10% TG pea was added and mixed thoroughly, the gum system, hydrogenated palm kernel oil and the seasoning blend was added to the mixture, and all were mixed. The textured pea protein was added to the dry blends and thoroughly mixed together. The oil and the water were subsequently added and mixed. The batter was molded into a meat ball and allowed to be sit on the table top for 30 minutes. A coating system was developed by using a 1% Flax in solution. FIGS. 5 and 7, respectively, show the freshly-made meatball prior to cooking and the cooked meatball.

**Table 8**

| **Ingredients for Vegan Meatball Using TG-TPP** | | | |
|---|---|---|---|
| Ingredient | Formulation using different binders | | |
| Textured Pea Protein | 50 | 60 | 60 |
| HarvestPro^{®} pea 85 | 10.29 | 6 | 6 |
| 10% TG pea | 4 | - | - |
| Glanbia gum system | 1.6 | - | - |
| Flax | - | 0.5 | 0.5 |
| Chia | - | 0.5 | 0.5 |
| Ticaloid^{®} BIND 1-96 Powder | - | - | 1 |
| Canola/coconut oil blend | 8 | 10 | 10 |
| Hydrogenated palm kernel oil | 8 | 8 | 8 |
| Seasoning blend | 4 | 4 | 4 |
| Water | 18 to 40 | 5 - 10 | 5 - 10 |

The 10% TG pea ingredient is an admixture of transglutaminase and pea protein at the ratio of 10 to 100, by weight. The gum system is an admixture of flax and pea protein at the ratio 40 to 60, by weight. The canola/coconut oil blend is an admixture of canola oil and coconut oil at the ratio of 60 to 40, by weight. The seasoning blend is a mixture of sundried tomatoes, paprika, nutritional yeast, garlic, salt, oregano, and flavor.

Table 9 shows the texture analysis for the meat ball made using textured pea as compared to a commercially-available beef-based meatball.

**Table 9**

| **Texture Analysis for Textured Pea-Based vs Beef-Based (Commercial) Meatball (10% TG Binder)** | | |
|---|---|---|
| **Type of Meatball** | **Textured Pea-Based** | **Beef-based** |
| **Initial Slope (g/sec)** | 65.4 | 120.8 |
| **Total Slope (g/sec)** | 76.7 | 99.9 |
| **Hardness (g)** | 3562.5 | 5680.0 |
| **Toughness/Chew (g.sec)** | 96009.0 | 193923.7 |
| **Tackiness** | -25.2 | -23.2 |
| **Stickiness (g.sec)** | -30.2 | -59.8 |

### Use of TG-TPP to make Vegan "Meat" Patties

The ingredients for vegan meat patties are listed in Table 10. Textured vegetable protein was measured and added to boiling water and cooked for 10 minutes. (In an alternate process, boiling water was added to the TG-TPP and allowed to sit for 15 minutes on the table top). Pea protein was measured into a bowl, 10% TG pea was added and mixed thoroughly, the gum system, hydrogenated palm kernel oil and the seasoning blend was added to the mixture and mixed. The textured vegetable protein was added to the dry blends and thoroughly mixed together. The oil and the water were subsequently added and mixed. The batter was molded into meat balls and allowed to rest on a table top for 30 minutes. FIGS. 9 and 10 show freshly made veggie patties before and after cooking.

**Table 10**

| **Ingredients for Vegan Meat Patties** | | | |
|---|---|---|---|
| | **Formulation using different binders** | | |
| Textured vegetable protein | 65.8 | 73 | 73 |
| Pea protein | 6.8 | 4.9 | 4.9 |
| 10% TG pea | 2.6 | - | - |
| Ticaloid^{®} BIND 1-96Powder | | 1 | - |
| Flax | | 0.5 | 0.5 |
| Chia | | 0.5 | 0.5 |
| Gum system (Glanbia) | 1.1 | - | - |
| Canola/coconut oil blend | 5.3 | 10 | 10 |
| Hydrogenated palm kernel oil | 2.6 | 6 | 6 |
| Seasoning blend | 2.6 | 4 | 4 |
| Water | 13.2 | 1-3 | 1-3 |

The seasoning blend is a mixture of liquid smoke, paprika, nutritional yeast, garlic, salt, oregano, and flavor.

### Use of TG-TPP in Vegan Sausage

The ingredients for vegan sausage are listed in Table 11. Textured vegetable protein was measured and added to boiling water and cooked for 10 minutes. (Or boiling water was added to the textured vegetable protein and allowed to sit for 15 minutes on the table top). HarvestPro^{®} Pea Protein 85 (Glanbia Nutritionals, Monroe, WI) was measured into a bowl, and 10% TG pea was added and mixed thoroughly. The gum system, hydrogenated palm kernel oil, and the seasoning blend were added to the mixture and further mixed. The textured vegetable protein was added to the dry blends and thoroughly mixed together. The oil and the water were subsequently added and mixed. The batter was molded into meat ball and allowed to rest on the table top for 30 minutes. FIG. 11 is a photo of the freshly-cooked sausage.

**Table 11**

| **Ingredients for Vegan Sausage** | |
|---|---|
| **Ingredients** | **Amount (g)** |
| Textured pea protein (TG-TPP) | 46.1 |
| HarvestPro^{®} pea 85 | 9.9 |
| TG Blend | 5.3 |
| Gum system (Glanbia) | 1.3 |
| Canola/coconut oil blend | 5.3 |
| Seasoning blend | 2.6 |
| Water | 29.6 |

The seasoning blend was a mixture of liquid smoke, paprika, nutritional yeast, garlic, salt, oregano, and flavor.

### Use of TG-TPP in Vegan Chicken Nugget

Ingredients for making a vegan chicken nugget using TG-TPP are listed in Table 12. Textured vegetable protein was measured and added to boiling water and cooked for 10 minutes. (Or boiling water was added to the textured vegetable protein and allowed to sit for 15 minutes on the table top). The textured vegetable protein was added and mixed with the other ingredients in a blender. About 21 g of the blend was measured, formed into a disc, and placed in the freezer for 10 minutes. Afterward, the nugget was dipped into a flour dredge and tempura batter in preparation for frying (for 2 minutes). FIG. 12 is a photo of a freshly-made nugget, and the FIG. 13 the nugget after it was dipped in tempura batter and fried.

**Table 12**

| **Ingredients for TG-TPP Chicken Nugget** | |
|---|---|
| **Ingredients** | **Amount (g)** |
| Textured vegetable protein | 87.5 |
| Canola/coconut oil blend | 7.3 |
| Corn flour | 1.8 |
| Flax | 0.9 |
| Seasoning blend | 2.4 |

The seasoning blend was a mixture of garlic, onion, salt, pepper, and flavor.

### Use of TG-TPP in Vegan Crumbles

Ingredients for making a vegan crumbles product using TG-TPP are listed in Table 13. Textured vegetable protein was measured and added to boiling water and cooked for 10 minutes. (Or boiling water was added to the textured vegetable protein and allowed to sit for 15 minutes on the table top). The seasoning blend was added to the desired amount of liquid mix (water, liquid smoke and soy sauce). The admixture was boiled for 2 minutes before adding the textured vegetable protein. The admixture was allowed to cook until the liquid system was completely absorbed or evaporated.

**Table 13**

| **Ingredients for TG-TPP Crumbles** | |
|---|---|
| **Ingredients** | **Amount (g)** |
| Textured vegetable protein | 77 |
| Liquid system | 19 |
| Seasoning blend | 4 |

The seasoning blend comprised chili powder, garlic powder, onion powder, red pepper flakes, oregano, paprika, cumin, salt and black pepper.

### Use of TG-TPP in Ground Meat-Like Crumble Products: Street Tacos and Italian-Sausage for Pizza

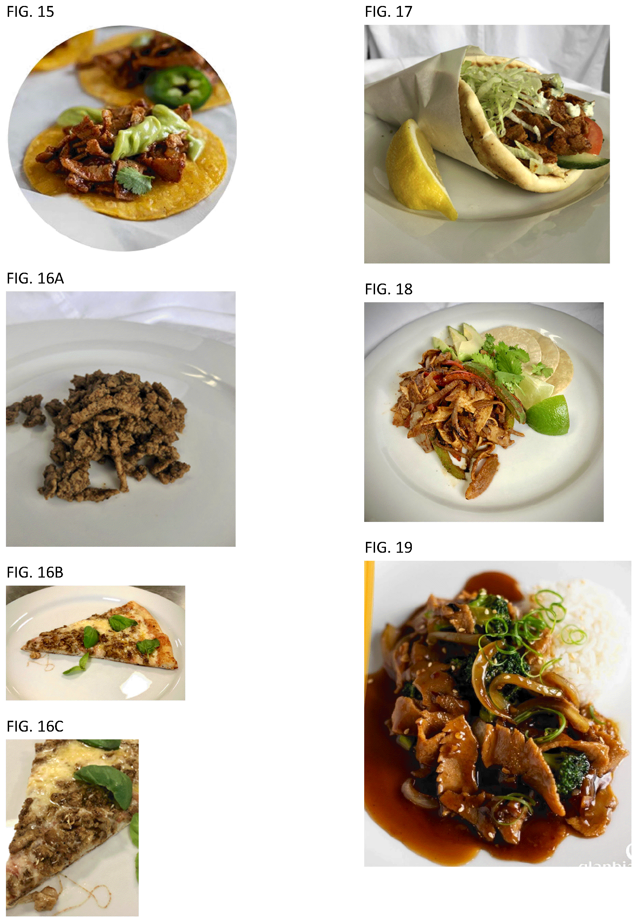

Ingredients for making ground meat-like products using TG-TPP are listed in Table 14 (Street Tacos) and Table 15 (Pizza with plant-based Italian Sausage). Dried crumble pieces were added to boiling water for about 7 to 10 minutes or until hydrated to desired level based on preferred texture and further processing, seasoning, flavoring, etc. needed. Ideally, fully cooked and hydrated dried pieces were boiled until a hydration ratio of about 2:1 to about 3:1 water to pieces was reached. Alternatively, the dried textured protein was partially hydrated in excess water, drained and simmered with the remaining water needed along with spices, flavorings, coloring and any other ingredients until the desired result was achieved. In some cases, the use of caramel coloring or other darker sauce components like soy sauce, Worcestershire, molasses, vegemite, marmite, etc. was used to obtain more of a beef-like appearance. FIG. 15 is a photograph of a freshly-made street taco. FIG. 16A is a photograph freshly-made "Italian sausage," and FIGS. 16B and 16C are photographs of the "Italian sausage" on pizza.

**Table 14**

| **Ingredients for TG-TPP Street Taco Crumbles** | |
|---|---|
| | **% Tot.** |
| **Ingredient** | **Formula** |
| Taco Spice Blend | 6.16% |
| Salt | 0.82% |
| Hydrated Crumble | 57.47% |
| Water | 34.89% |
| Achiote Paste | 0.66% |
| **TOTAL** | **100.00%** |

**Table 15**

| **Ingredients for TG-TPP Italian Sausage Crumbles** | |
|---|---|
| | **% Tot.** |
| **Ingredient** | **Formula** |
| Hydrated Crumble | 58.82% |
| Italian Spice | 4.62% |
| Water | 35.71% |
| Salt | 0.84% |
| **TOTAL** | **100.00%** |

### Use of TG-TPP in "Steak" Strip Products: Gyro Sandwich, Fajitas, Mongolian Beef and Broccoli, and BBQ Sandwich

Ingredients for making "steak" strip products using TG-TPP are listed in Table 16 (Gyro Sandwich), Table 17 (Fajitas), Table 18 (Broccoli and Plant-Based Beef), and Table 19 (BBQ Sandwich). Dried strip pieces were added to boiling water for about 7 to 10 minutes or until hydrated to desired level based on preferred texture and further processing, seasoning, flavoring, etc. needed. Ideally, fully cooked and hydrated dried pieces were boiled until a hydration ratio of about 2:1 to about 3:1 water to pieces was reached. Alternatively, the dried textured protein was partially hydrated in excess water, drained and simmered with the remaining water needed along with spices, flavorings, coloring and any other ingredients until the desired result was achieved. In some cases, the use of caramel coloring or other darker sauce components like soy sauce, Worcestershire, molasses, vegemite, marmite, etc. was used to obtain more of a beef-like appearance.

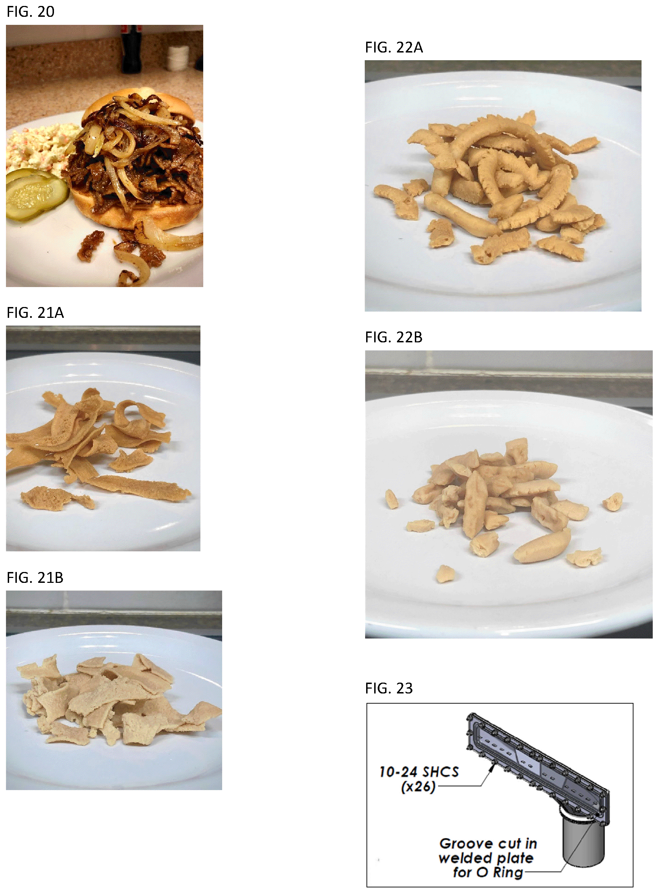

FIGS. 21A and 21B show the appearance of dried vs. hydrated strips, respectively. FIGS. 22A and 22B show the appearance of dried vs. hydrated crumbles, respectively. The base material is naturally lighter in color and comparable to chicken or pork. Various seasonings and sauces can be used to flavor the product, but also make it appear darker in color and more like beef.

**Table 16**

| **Ingredients for TG-TPP Gyro Sandwich Strips** | |
|---|---|
| | **% Tot.** |
| **Ingredient** | **Formula** |
| Hydrated Strip | 58.24% |
| Gyro Spice | 5.64% |
| Water | 36.12% |
| **TOTAL** | **100.00%** |

**Table 17**

| **Ingredients for TG-TPP Fajita Strips** | |
|---|---|
| | **% Tot.** |
| **Ingredient** | **Formula** |
| Hydrated Strip (B) | 38.72% |
| Taco Spice | 5.81% |
| Salt | 0.77% |
| Onion | 24.69% |
| Red Pepper | 12.10% |
| Green Pepper | 12.10% |
| Oil | 5.81% |
| **TOTAL** | **100.00%** |

**Table 18**

| **Ingredients for TG-TPP Broccoli and Plant-Based Beef Strips** | |
|---|---|
| | **% Tot.** |
| **Ingredient** | **Formula** |
| Blanched Broccoli | 17.78% |
| Jullienne Onion | 12.26% |
| Ginger | 2.15% |
| Garlic | 3.98% |
| HP Strip (D) | 24.52% |
| Stir Fry Sauce | 34.32% |
| Sesame Oil | 2.45% |
| Vegetable Oil | 2.45% |
| Steak Spice | 0.09% |
| **TOTAL** | **100.00%** |

**Table 19**

| **Ingredients for TG-TPP BBQ Sandwich Strips** | |
|---|---|
| | **% Tot.** |
| **Ingredient** | **Formula** |
| Simplant (A) | 57.97% |
| BBQ Sauce | 34.78% |
| Steak Spice | 2.03% |
| Molasses | 5.22% |
| **TOTAL** | **100.00%** |

### Funnel Adapter and Custom Cold Extrusion Die for Plant Based Meat Strips

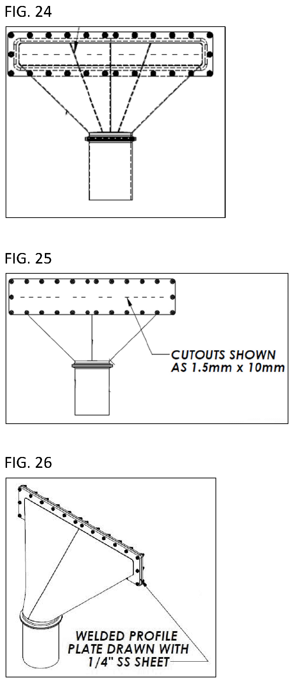

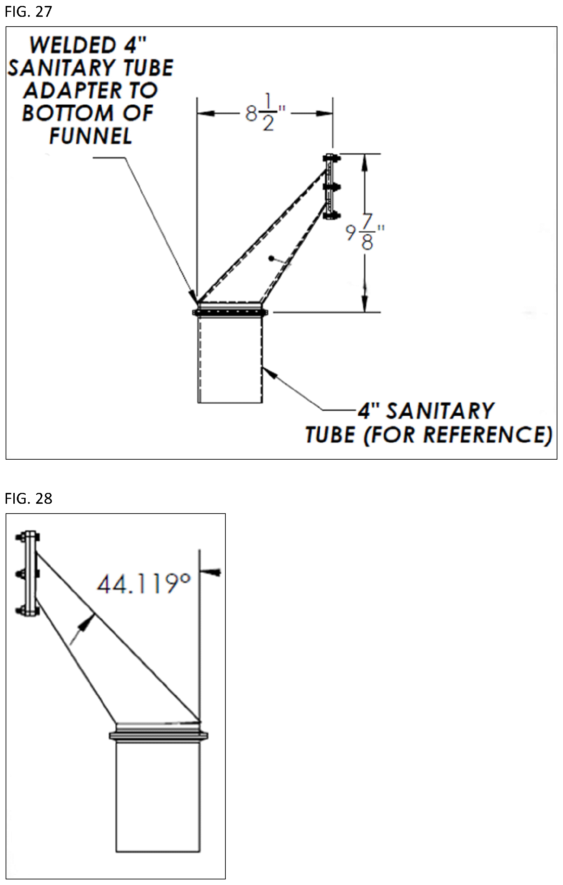

In order to obtain more of a meat-like strip in appearance and texture, the inventors developed a funnel adaptor and custom die for use with a cold extrusion system. The funnel adapter and custom die were built to ensure even distribution of the TPP strips across a belt or sheet pan without stacking, in order to obtain consistent drying and prevent strips from cross linking with each other after initial compression and forming. The adapter was designed with the ability to easily change the die plate for size and shape adjustments. As shown in FIG. 25, cutouts are displayed on a stainless steel plate or die where the extrudate exits to form the plant-based meat strips. The cutouts can be modified and easily changed for a desired width. The adapter is designed to be compatible with any type of low-pressure extrusion, including grinders, pasta machines and other single screw extrusion units. The length, width and size of the adapter, die, funnel and all corresponding components can be adjusted based on belt, width, and speed of the drying oven available. FIGS. 23-28 illustrate exemplary dimensions and sizes of the custom adapter and die. In an embodiment, the die plate can have the following dimensions: L:19%"x W:4 ⅜"x D:⅛". Screw placement connecting the die plate can be 1¾" on center between screws. Not shown is the coupling apparatus used to attach the sanitary tube of the adapter to the single screw extrusion unit. The coupling can be modified to fit a number of single screw machines, extruders, and grinders, for example.

Although the foregoing specification and examples fully disclose and enable the present invention, they are not intended to limit the scope of the invention, which is defined by the claims appended hereto.

All publications, patents and patent applications are incorporated herein by reference. While in the foregoing specification this invention has been described in relation to certain embodiments thereof, and many details have been set forth for purposes of illustration, it will be apparent to those skilled in the art that the invention is susceptible to additional embodiments and that certain of the details described herein may be varied considerably without departing from the basic principles of the invention.

The use of the terms "a" and "an" and "the" and similar referents in the context of describing the invention are to be construed to cover both the singular and the plural, unless otherwise indicated herein or clearly contradicted by context.

As used herein, the term "about," when referring to a value is meant to encompass variations of, in some embodiments ± 50%, in some embodiments ± 20%, in some embodiments ± 10%, in some embodiments ± 5%, in some embodiments ± 1%, in some embodiments ± 0.5%, and in some embodiments ± 0.1% from the specified amount, as such variations are appropriate to perform the disclosed methods or employ the disclosed compositions.

The terms "comprising," "having," "including," and "containing" are to be construed as open-ended terms (i.e., meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. It is understood that embodiments described herein include "consisting of" and/or "consisting essentially of" embodiments.

The transitional phrase "consisting of" excludes any element, step, or ingredient not specified in the claim.

"Consisting essentially of" generally limits a feature, compound, composition or method to the recited elements and/or steps but does not exclude the possibility of additional elements and/or steps that do not materially affect the function, compound, composition and/or characteristics of the recited feature, compound, composition or method. The transitional phrase "consisting essentially of" limits the scope of a claim to the specified materials or steps and those that do not materially affect the basic and novel characteristic(s) of the claimed invention.

All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Embodiments of this invention are described herein, including the best mode known to the inventors for carrying out the invention. Variations of those embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method for producing a textured plant protein product, the method comprising the steps of
(a) admixing water, transglutaminase, and plant protein to produce a water/transglutaminase plant protein admixture;
(b) holding the admixture for a period of time sufficient to produce a gelatinized protein cake;
(c) shaping the gelatinized protein cake to produce a strip protein product; and
(d) drying the strip protein product at a drying temperature of from about 60 to about 300 degrees Celsius, to produce the textured plant protein product;
wherein step (c) of the method is performed using cold extrusion processing.

2. The method of claim 1, wherein the plant protein is at least one pea protein.

3. The method of claim 1 or claim 2, wherein step (b) comprises holding the admixture for the period of from 0.5 minutes to about 60 minutes.

4. The method of any preceding claim, wherein a ratio of the water to the plant protein in the admixture comprises from about 0.5:1 to about 5: 1.

5. The method of claim 4, wherein the ratio of the water to the plant protein in the admixture comprises from about 2:1 to about 3:1.

6. The method of any preceding claim, wherein the transglutaminase is added at from about 0.0001 percent to about 10 percent of the admixture, by weight.

7. The method of any preceding claim, wherein the transglutaminase is a microbial transglutaminase.

8. The method of any preceding claim, wherein step (c) is performed using a cold extrusion die.

9. The method of any preceding claim, wherein the transglutaminase is present at from about 0.01% to about 10%, by weight.

10. The method of any preceding claim, wherein the plant protein is selected from the group consisting of protein from red lentils, green lentils, yellow lentils, brown lentils, chickpeas, garden peas, black-eyed peas, runner beans, fava beans, kidney beans, and combinations thereof.

11. The method of any preceding claim, wherein step (c) is performed at room temperature.

12. The method of any preceding claim, wherein steps (a) to (c) of the method are performed using cold extrusion processing.

13. The method of any preceding claim, wherein the strip protein product is a meat-like strip protein product.

14. A formed meat substitute product comprising at least one textured protein product obtainable by the method of any preceding claim.

15. The formed meat substitute product of claim 14, comprising (a) the at least one textured protein product and (b) at least one plant protein, preferably wherein the at least one plant protein comprises at least one pea protein.
